(11) **EP 2 036 947 B1**

(12) **EUROPEAN PATENT SPECIFICATION**

(45) Date of publication and mention
of the grant of the patent:
**08.09.2010 Bulletin 2010/36**

(51) Int Cl.:
**C08L 23/10** (2006.01)  **C08K 3/26** (2006.01)
**C08K 3/34** (2006.01)  **C08K 7/10** (2006.01)
**C08L 23/04** (2006.01)  **C08L 23/06** (2006.01)
**C08L 23/08** (2006.01)  **C08L 23/16** (2006.01)

(21) Application number: **07018114.4**

(22) Date of filing: **14.09.2007**

(54) **Polyolefin compounds with improved properties**

Polyolefinverbindungen mit verbesserten Eigenschaften

Composants de polyoléfine avec des propriétés améliorées

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**18.03.2009 Bulletin 2009/12**

(73) Proprietor: **Borealis Technology Oy**
**06101 Porvoo (FI)**

(72) Inventors:
• **Motha, Kshama**
**00980 Helsinki (FI)**
• **Gahleitner, Markus**
**4501 Neuhofen/ Krems (AT)**

• **Kaminski, Heinrich**
**4400 Steyr (AT)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 1 801 156**   **WO-A-2005/123827**
**WO-A-2006/114358**  **KR-A- 20040 054 899**
**US-A1- 2001 006 990**  **US-A1- 2006 052 541**
**US-A1- 2007 155 884**

**Description**

The present invention relates to propylene polymer compositions showing a highly satisfactory balance of mechanical properties while, at the same time, also providing good dimensional stability in particular low shrinkage anisotropy, as well as highly satisfactory surface properties, in particular scratch resistance.

**Technological Background**

Propylene polymer compositions are used over a broad variety of technical fields and filled propylene polymer compositions, in particular, are widely employed in automotive applications in order to provide good mechanical properties. However, as in semicrystalline polymers in general, dimensional stability and, in particular, post-molding shrinkage as well as shrinkage anisotropy are frequently considered too high for demanding applications. Furthermore, surface properties, such as smoothness as well as scratch resistance and mar resistance of filled polymer systems are often insufficient in view of the ever-increasing commercial needs.

Various approaches accordingly have been made in order to fulfil the demands of the automotive field, namely to provide filled polymer systems providing desirable mechanical properties in combination with satisfactory dimensional stability and surface properties.

WO 2004/000899, for example, suggests employing a polypropylene polymer composition with a bimodal rubber component in order to improve surface toughness, in particular scratch resistance. Other means for increasing scratch resistance are, for example, the addition of silica materials disclosed, for example, in JP 1318051 A. On the other hand, EP 0804503 A discloses a composition comprising a functionalized polypropylene material and an amorphous, fatty acid amide modified silica gel, compounded with a polyolefin comprising a mineral filler, displaying an improved scratch resistance. Fatty acid amides, however, are well known to contribute negatively to the phenomenon of fogging, limiting the applicability of such compositions, for example. in automotive interior applications.

WO 2005/066265 discloses a filled olefin polymer composition having improved mechanical properties and scratch resistance comprising an oxidized olefin polymer, a maleated polypropylene and a filler. Both oxidized polymers and maleated polypropylene are well known in the art to reduce lifetime of polymer compositions and to impair sensory properties, such as smell.

US 2002/0192410 A discloses a polyolefin composition comprising 30 to 75-wt% of a filler, wherein the filler comprises a high aspect ratio filler component and a low aspect ratio filler component, wherein the low aspect ratio filler component constitutes the major portion of the filler contained in the polyolefin composition. Such high filler contents will, however, necessarily result in brittleness and bad scratch resistance.

EP 1746128 A1 finally discloses a propylene polymer composition having high impact strength and high stiffness, suitable for the manufacture of parts having a good surface quality, comprising a specific combination of a heterophasic propylene copolymer with a filler and a beta-nucleating agent. It is well known, however, that propylene polymer compositions comprising beta-nucleating agents are highly sensitive towards variations of processing conditions in terms of expressing their mechanical property profile.

US 2006052541 and EP 1801156 also disclose propylene polymer compositions.

However, the various approaches as identified in the prior art, aiming at providing polyolefin compositions having a good balance of mechanical properties, dimensional stability and surface properties suffer from particular drawbacks. Typically, high filler loadings are required in order to achieve the required mechanical properties, wherein further high filler loadings are considered beneficial due to cost considerations. However, high filler loadings are disadvantageous in that the required uniform incorporation of the filler into the polymeric material is more laborious, leading furthermore to a product more difficult to process further. In addition, high loadings of fillers with high aspect ratios lead to compounds having a high anisotropy, an effect detrimental in product applications where high geometrical precision is required. Other approaches of the prior art, focusing on the polymeric components of the compound are disadvantageous in that they either require functionalized polymers, such as maleated polypropylene which are more expensive than conventional polypropylenes, or the use of bimodal rubber comprising polypropylene compositions (see above) requiring more laborious processes for the preparation of the polymeric component.

Accordingly, there is a need in the art for a polymer composition overcoming some or all of the drawbacks identified above, while still providing a polymer composition having a good balance of mechanical properties, dimensional stability and surface properties.

**Brief description of the invention**

The above object has been solved with the propylene polymer composition according to claim 1. Preferred embodiments are defined in claims 2 to 5 as well as the following specification. Furthermore, the present invention provides a molded article according to claim 6 comprising the propylene polymer composition as defined herein and the use of the polymer composition in accordance with claim 7.

## Detailed description of the invention

Heterophasic propylene copolymer

One main component of the propylene polymer composition in accordance with the present invention is a heterophasic propylene copolymer, comprising propylene as well as ethylene and/or an α-olefin with 4 to 12 carbon atoms. The propylene polymer composition of the invention may comprise one or more heterophasic propylene copolymer components.

The composition in accordance with the present invention comprises at least 50-wt% (based on the total propylene polymer composition) of a heterophasic propylene copolymer. In embodiments, the heterophasic propylene copolymer is contained in the polyolefin composition in accordance with the present invention in amounts of at least 55-wt%, at least 60-wt% and, in particular, from 60 to 65-wt%. Suitable upper limits for the content of the heterophasic propylene copolymer are 85-wt% and in other embodiments 80-wt%. Accordingly, the present invention contemplates contents of heterophasic propylene copolymer in the polyolefin composition of the present invention in a range of from 50 to 85-wt%, and in embodiments from 55 to 80-wt%, and in particular from 60 to 75-wt%.

The term "heterophasic propylene copolymer" as employed in the present application defines a copolymer comprising a matrix phase and a dispersed phase. The matrix phase usually comprises from 65 to 95-wt% of the heterophasic propylene copolymer while the dispersed phase amounts to 5 to 35-wt% of the heterophasic propylene copolymer. The heterophasic propylene copolymer to be employed in accordance with the present invention may be any suitable and conventional heterophasic propylene copolymer known to the skilled person. The skilled person is readily aware of how such bimodal or multimodal propylene copolymer components can be obtained, for example by mechanical blending including mixing and melt blending processes and any combinations thereof as well as *in situ* blending during the polymerisation process of the propylene polymer component(s), or any combination of mechanical and in-situ blending. Heterophasic propylene copolymers obtained by sequential polymerisation processes (i.e. "*in situ* blends") are often also referred to as RTPO materials.

Such heterophasic propylene copolymers may be prepared in any known manner, including sequential polymerization reactions, wherein the components are blended together *in situ* during their preparation process, the above mentioned mechanical blending processes as well as a combination of *in situ* blending and mechanical blending. Sequential polymerisation reactions are preferred for preparing the heterophasic propylene copolymer to be employed in the present invention.

The modality of the matrix phase with respect to molecular weight distribution and thus with respect to melt flow ratio is not critical. Thus the polypropylene matrix phase in accordance with the present invention may be unimodal or multimodal including bimodal with respect to molecular weight distribution. The polypropylene matrix phase of the invention may also be multimodal with respect to comonomer distribution.

The heterophasic propylene copolymer to be employed in accordance with the present invention may thus comprise a matrix phase comprising only one propylene polymer component or the matrix phase may comprise more than one propylene polymer, such as two, three or four different propylene polymers. In preferred embodiments, the matrix phase comprises at least two propylene polymer components.

The matrix phase usually comprises at least one propylene homopolymer or a propylene copolymer and/or a further propylene copolymer. In embodiments, the matrix phase comprises at least two propylene polymer components, preferably either (i) a propylene homopolymer or a propylene random copolymer in combination with (ii) a propylene random copolymer. The propylene polymer components for the matrix phase may be combined in any suitable manner, preferably, by preparing the matrix phase as in-situ reactor blend, i.e. by preparing the different components of the matrix phase during subsequent polymerization steps in suitable reactor arrangements. Alternatively, the matrix phase may be combined by mechanical (melt) blending different propylene polymer components.

Likewise, the dispersed phase, i.e. the elastomeric rubber phase, may comprise one suitable elastomeric copolymer or more than one, such as two, three or four. In preferred embodiments, the heterophasic propylene copolymer to be employed in accordance with the present invention comprises a dispersed phase comprising one or two elastomeric rubbery polymer phases. Suitable and preferred embodiments of the heterophasic propylene copolymer are discussed in the following.

By the term "random copolymer" is meant herein that the comonomer in said copolymer is distributed randomly, i.e. by statistical insertion of the comonomer units, within the copolymer chain. Said term "random" copolymer is generally known and used in the art and abbreviated herein below as "polypropylene copolymer".

The matrix phase of the heterophasic propylene copolymer to be used in accordance with the present invention furthermore is characterized in that it may comprise up to 10-wt% of ethylene and/or at least one $C_4$-$C_{12}$, preferably $C_4$-$C_8$ α-olefin. In case of ethylene as a comonomer, the matrix phase of the heterophasic propylene copolymer comprises 1 to 10-wt%) preferably up to 6-wt%, for example 1 to 6-wt%, or 2 to 5.5-wt%, of ethylene based on the total weight of the matrix component. In case of $C_4$-$C_{12}$ $\alpha$-olefin, the matrix phase comprises preferably 2 to 8 mol% or 3 to 7 mol% of $C_4$-$C_{12}$ $\alpha$-olefin. Preferably, the matrix phase of the heterophasic propylene copolymer comprises, in addition to propylene, only ethylene as further matrix component.

Concerning components (i) and (ii) of the matrix phase, it furthermore is preferred when component (i) has a lower xylene soluble fraction than component (ii). Generally, stiffness is lowered and impact strength is increased with increasing the fraction of xylene soluble in component (ii).

When the component (i) of the matrix component of the heterophasic propylene copolymer in accordance with one preferred embodiment of the present invention is a propylene copolymer, it is preferred that the ethylene amount of component (i) is not more than 4-wt%, preferably 1.5 to 2-wt%, based on the total ethylene amount of the matrix component of the heterophasic propylene copolymer.

By adjusting the ethylene content in the random copolymer (ii), it is possible to tailor stiffness (tensile modulus) properties and also impact (Charpy) properties. Higher ethylene contents generally lower stiffness and increase impact properties, in particular when the ethylene content of the random copolymer exceeds 7-wt%.

The matrix phase of the heterophasic propylene copolymer may be unimodal or multimodal, i.e. the different components of the matrix phase may either show similar molecular weight distributions or different molecular weight distributions (and accordingly also $MFR_2$ values).

Herein the term "Multimodal" includes bimodal molecular weight distribution. It is preferred when the matrix phase of the heterophasic propylene copolymer has at least bimodal molecular weight distribution. Such a preferred embodiment can be realized by providing a matrix phase having a broad molecular weight distribution and comprising the at least two propylene polymer components (i) and (ii) with different weight average molecular weights (MW) and, thus, with different melt flow ratios ($MFR_2$). Such an embodiment may be exemplified by a mixture of a lower molecular weight component with a higher molecular weight component. The lower molecular weight (LMW) component has a higher $MFR_2$ than the higher molecular weight (HMW) component. In embodiments, the LMW component is the at least one component (i) while the HMW component is the at least one component (ii). In embodiments, this order, however, may also be reversed. As outlined above, it is preferred when the matrix phase of the heterophasic propylene copolymer is bimodal, comprising a LMW component and a HMW component. The amount of the LMW component is typically between 30 to 70-wt%, preferably 40 to 60-wt% of the total amount of the matrix phase. The amount of the HMW component is typically between 30 to 70-wt%, preferably 40 to 60-wt% of the total amount of the matrix phase.

In embodiments, the ratio ($MFR_2$ of LMW component) to ($MFR_2$ of HMW component) is typically at least 3, preferably at least 4, more preferably at least 10, and in some end applications even at least 15 is desired. The upper limit of said ratio may be up to 200, preferably up to 100.

In embodiments, it is also preferred when the matrix phase of the heterophasic propylene copolymer is multimodal, including bimodal, with respect to the comonomer distribution. In accordance with the present invention this means a different comonomer content (weight percent) between the components of the matrix phase, i.e. components (i) and (ii) of the matrix component. As outlined above, the matrix component preferably comprises at least two different propylene polymer components, i.e. at least one component in accordance with definition (i) and at least one component in accordance with definition (ii). However, the matrix component may comprise more than one component of each of the components (i) and (ii) as defined above. At least one of components (i) and (ii) is a copolymer. In case of two different comonomer components (i) and (ii), the comonomer content and/or the type of comonomer may differ. Thus also any mixtures of propylene with different comonomer of at least one copolymer component of the matrix are covered herein.

In embodiments it is preferred when the components (i) and (ii) differ with respect to their comonomer content and it is preferred when the comonomer content of (i) is lower than the comonomer content of (ii).

The matrix phase in accordance with the present invention may show an $MFR_2$ (ISO 1133, at 230°C, 2,16 kg load) of from 0.5 to 50 g/10 min, such as from 5 to 30 g/10 min and in embodiments from 7 to 20 g/10 min. In embodiments, however, the $MFR_2$ may be higher, such as outlined below.

The overall $MFR_2$ (ISO 1133, at 230°C, 2,16 kg load) of the heterophasic propylene copolymer to be employed in accordance with the present invention preferably is of from 0.5 to 50 g/10 min, and more preferably 20 g/min or less, such as from 18 to 8 g/min.

The heterophasic propylene copolymer to be employed in accordance with the present invention furthermore comprises a dispersed elastomeric rubber phase. This dispersed phase (rubber phase) typically makes up to 35-wt% of the total weight of the heterophasic propylene copolymer. Suitable ranges are 5 to 30-wt% and in embodiments also 10 to 25-wt%.

The dispersed phase comprises at least one elastomeric copolymer of propylene and one or more olefin comonomer, comprising from 20 to 80-wt% of olefin comonomer. The olefin comonomer is preferably ethylene and/or $C_4$-$C_8$ alpha-olefin. Suitable amounts of ethylene or $C_4$-$C_8$ alpha-olefin in the elastomeric propylene copolymer are accordingly 20 to 80-wt%, 25 to 50-wt% or 30 to 40-wt% of ethylene or $C_4$-$C_8$ alpha-olefin, or any mixture thereof.

Preferably the comonomer is ethylene. The dispersed phase includes also terpolymers of propylene and two different olefin comonomers, such as with ethylene and a $C_4$-$C_8$ α-olefin. In case of two or more comonomers the total amount of comonomer is preferably as given above for individual comonomers.

According to a preferred embodiment of the present invention, the dispersed phase, i.e. the ethylene rubber copolymer is an ethylene propylene rubber (EPR). EPR materials are more cost-effective than rubbers with higher α-olefins and they can either be synthesized in a final step of a multi-step process, where the first steps synthesize the matrix polymer, or they can be mechanically blended with the matrix polymer in a separate melt blending step.

In a preferred embodiment, the dispersed phase comprises more than one rubber component, i.e. preferably the dispersed phase is a multimodal rubber phase, in particular a bimodal rubber phase. Preferably, the bimodal rubber phase comprises two different EPR components, i.e. elastomeric ethylene propylene copolymers. These two different rubber components typically differ, at least with respect to one property, such as intrinsic viscosity, comonomer content and/or $MFR_2$ and preferably the two different rubber component differ with respect to two properties, preferably intrinsic viscosity and comonomer content. Preferably, one of the two rubber components has a higher comonomer content, preferably ethylene content, compared with the other rubber component and even more preferably the rubber component with the higher comonomer content, preferably ethylene content, shows a smaller intrinsic viscosity, compared with the rubber component showing the lower comonomer content, preferably ethylene content. A particular preferred embodiment in this respect is given when the rubber component with the higher comonomer content has a comonomer content, preferably ethylene content, being 5-mol% or more higher than the comonomer content, preferably ethylene content of the other rubber component. With respect to the intrinsic viscosity, it is preferred when the intrinsic viscosity difference between the higher comonomer content rubber component and the lower comonomer content rubber component is at least 1.0 dl/g, more preferably at least 1.5 dl/g, and in embodiments accordingly from 1.0 dl/g to 6.0 dl/g. Suitable examples of bimodal rubber components in combination with a matrix phase are disclosed in WO 2005/118712.

Accordingly, a particularly preferred heterophasic propylene copolymer to be employed in accordance with the present invention is a heterophasic propylene copolymer as defined in WO 2005/118712 in claim 1, components A) to C). Accordingly, a preferred heterophasic propylene copolymer to be employed in accordance with the present invention comprises the following:

A) 45 to 79 parts by weight of a propylene polymer comprising a propylene homopolymer and/or a propylene copolymer with up to 10-mol% of ethylene and/or one or more $C_4$-$C_8$ α-olefins, the propylene polymer having an $MFR_2$ of $\geq$ 80g/10min,
B) 10 to 27 parts by weight of an elastomeric ethylene-propylene copolymer having an intrinsic viscosity (IV) of $\leq$ 2.4 dl/g and an ethylene content of at least 75-mol%, and
C) 5 to 22 parts by weight of an elastomeric ethylene-propylene copolymer having an intrinsic viscosity (IV) of 4.0 to 6.5 dl/g and an ethylene content of up to 70-mol%.

The preferred embodiments for components A) to C) as defined in WO 2005/118712 .

In embodiments of the present invention the intrinsic viscosity of the dispersed phase is preferably equal to or smaller then the intrinsic viscosity of the matrix phase. Such an embodiment may lead to an improvement of the dispersion of the dispersed phase in the matrix phase. In accordance with such an embodiment it is in particular preferred when the $MFR_2$ of matrix phase of the heterophasic propylene copolymer is from 0.5 to 1.2 times the overall $MFR_2$ of the heterophasic propylene copolymer.

The heterophasic propylene copolymer as disclosed above suitably displays an intrinsic viscosity (IV) of the xylene soluble fraction (XS) of 3.0 dl/g or less, with a preferred lower limit of 1 dl/g. A suitable range, for example, is 1.3 to 2.5 dl/g. The total xylene soluble fraction of the heterophasic propylene copolymer suitably amounts up to 60-wt% of the heterophasic propylene copolymer, for example, 5 to 60-wt%, in embodiments 7 to 60-wt% and in other embodiments 7 to 40-wt%, 7 to 30-wt% or 12 to 40-wt%. The xylene soluble fraction of the matrix phase amounts up to 35-wt%, and in embodiments 2 to 5-wt% or 2 to 15-wt%. This value can be appropriately adjusted by measures known to the skilled person in the art depending on the desired end application. The xylene soluble fraction of the dispersed phase amounts up to 25-wt%, in embodiments 5 to 25-wt%, and also 10 to 25-wt%.

As outlined above, the heterophasic propylene copolymer to be employed in accordance with the present invention may be prepared in any suitable manner known to the skilled person in the art, including mechanical blending processes as well as, preferably, sequential polymerization processes. In this respect, it is also possible to prepare the matrix phase by suitable sequential polymerization processes, while the dispersed phase then can either be introduced by blending processes or by a further polymerization carried out in the presence of the already polymerized matrix phase.

According to a preferred embodiment of the present invention, the heterophasic propylene copolymer is a reactor made heterophasic propylene polymer (RTPO). Reactor made heterophasic propylene copolymer means herein a reaction product which is obtained from a polymerization reaction sequentially polymerizing the different components of the heterophasic propylene copolymer. In this respect, any polymerization method, including solution, slurry and bulk polymerization or gas phase polymerization can be used, in any desired order. Bulk polymerization defines in the present application a polymerization in a reaction medium comprising at least 60-wt% monomer.

In the following, a preferred process for preparing first the matrix phase of the heterophasic propylene copolymer is described, followed by a description of a further preferred embodiment also including the preparation of the dispersed phase.

When the matrix is unimodal with respect to the molecular weight distribution and comonomer distribution, it may be prepared in a single stage process e.g. as slurry or gas phase process in a slurry or gas phase reactor. Preferably, the unimodal matrix is polymerised as a slurry polymerisation. Alternatively, the unimodal matrix may be produced in a multistage process using at each stage process conditions which result in similar polymer properties.

The matrix phase of the heterophasic propylene copolymer to be used in accordance with the present invention, comprises preferably components (i) and (ii) as defined above may be prepared by polymerizing, in a slurry reactor, for example a loop reactor, propylene monomers optionally together with one or more comonomers, in the presence of a polymerization catalyst to produce component (i) of the matrix phase of the heterophasic propylene copolymer. This component (i) is then transferred to a subsequent gas phase reactor, wherein in the gas phase reactor propylene monomers are reacted in the presence of suitably selected comonomers in order to produce component (ii) in the presence of the reaction product of the first step. This reaction sequence provides a reactor blend of components (i) and (ii) constituting the matrix phase of the heterophasic propylene copolymer. It is of course possible by the present invention that the first reaction is carried out in a gas phase reactor while the second polymerization reaction is carried out in a slurry reactor, for example a loop reactor. It is furthermore also possible to reverse the order of producing components (i) and (ii), which has been described above in the order of first producing component (i) and then producing component (ii). The above-discussed process, comprising at least two polymerization steps, is advantageous in view of the fact that it provides easily controllable reaction steps enabling the preparation of a desired reactor blend of the matrix phase of the heterophasic propylene copolymer. The polymerization steps may be adjusted, for example by appropriately selecting monomer feed, comonomer feed, hydrogen feed, temperature and pressure in order to suitably adjust the properties of the polymerization products obtained. It is in particular possible to obtain the preferred multimodality, preferably the bimodality, of the matrix phase of the heterophasic propylene copolymer, with respect to the ethylene distribution as well as with respect to the molecular weights and $MFR_2$ values of the matrix phase components during said multistage polymerization procedures.

Such a process can be carried out using any suitable catalyst for the preparation of propylene monomers, including. Preferably, the process as discussed above is carried out using a Ziegler-Natta catalyst, in particular a high yield Ziegler-Natta catalyst (so called fourth and fifth generation type to differentiate from low yield, so called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound. Suitable catalysts are in particular disclosed in US 5,234,879, WO 92/19653, WO 92/19658 and WO 99/33843.

A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg based catalyst component and typically the co-catalyst is an Al-alkyl based compound. Suitable catalysts are in particular disclosed in US 5,234,879, WO 92/19653, WO 92/19658 and WO 99/33843.

Preferred external donors are the known silane-based donors, such as dicyclopentyl dimethoxy silane or cyclohexyl methyldimethoxy silane.

One embodiment of a process as discussed above is a loop-gas phase process, such as developed by Borealis, known as Borstar® technology, described for example in EP 0887379 A1 and WO 92/12182.

With respect to the above-mentioned preferred slurry-gas phase process, the following general information can be provided with respect to the process conditions.

Temperature of from 40°C to 110°C, preferably between 60°C and 100°C, in particular between 70°C and 90°C, with a pressure in the range of from 20 to 80 bar, preferably 30 to 60 bar, with the option of adding hydrogen in order to control the molecular weight. The reaction product of the slurry polymerization, which preferably is carried out in a loop reactor, is then transferred to the subsequent gas phase reactor, wherein the temperature preferably is within the range of from 50°C to 130°C, more preferably 60°C to 100°C, at a pressure in the range of from 5 to 50 bar, preferably 15 to 35 bar, again with the option of adding hydrogen in order to control the molecular weight.

The residence time can vary in the reactor zones identified above. In embodiments, the residence time in the slurry reaction, for example the loop reactor, is in the range of from 0.5 to 5 hours, for example 0.5 to 2 hours, while the residence time in the gas phase reactor generally will be from 1 to 8 hours.

The properties of the matrix phase produced with the above-outlined process may be adjusted and controlled with the process conditions as known to the skilled person, for example by one or more of the following process parameters:

temperature, hydrogen feed, comonomer feed, propylene feed, catalyst, type and amount of external donor, split between two or more components of a multimodal polymer.

In accordance with a further preferred embodiment of the present invention, the matrix phase produced in accordance with the preferred process discussed above is then transferred into a further reactor, preferably a gas phase reactor in order to polymerize an elastomeric propylene copolymer component, i.e. the dispersed phase, in the presence of the matrix phase.

A reactor blend comprising the matrix phase and the dispersed phase obtained with such a multistage polymerization process, preferably comprising a first slurry polymerization followed by at least two gas phase polymerization, is a preferred heterophasic propylene copolymer to be employed in accordance with the present invention. The process, e.g. comonomer content and MFR, are controlled in a known manner.

The propylene polymer composition in accordance with the present invention may comprise one heterophasic propylene copolymer as defined herein or it may comprise two or more heterophasic propylene copolymers as defined herein. In one embodiment, the propylene polymer composition in accordance with the present invention comprises two heterophasic propylene copolymers, wherein preferably one heterophasic propylene copolymer is a heterophasic propylene copolymer with a multimodal rubber phase, preferably a bimodal rubber phase, as defined above. The second heterophasic copolymer to be employed according to this embodiment of the present invention then is a heterophasic copolymer comprising a single rubber component. Typically, in this embodiment the heterophasic propylene copolymer with the multimodal rubber phase, preferably bimodal rubber phase, is present in a higher amount, compared with the amount of the second heterophasic propylene copolymer as defined above. Typically, the heterophasic propylene copolymer with the multimodal rubber phase in this embodiment is present, compared with the second heterophasic propylene copolymer in an amount so that a weight ratio of 5:1 to 20:1 results, preferably 10:1 to 15:1 (weight ratio of heterophasic copolymer with multimodal rubber:heterophasic copolymer with single rubber component).

Filler component

The filler component in accordance with the present invention consists of a mixture of wollastonite and calcium carbonate, wherein the filters is present in the propylene polymer composition in an amount of 2-25 wt%, based on the total weight of the propylene polymer composition. Preferably, the amount of filler component is from 10 to 20-wt%. Typical amounts of wollastonite and calcium carbonate are from 5 to 15-wt%each, preferably 6 to 12-wt%. The amount of wollastonite is higher than the amount of calcium carbonate. Illustrative ranges for suitable amounts of wollastonite and calcium carbonate for this embodiment, respectively, are 10 to 15-wt%, in particular 10 to 12-wt%, and 5 to 12-wt%, in particular 6 to 10-wt%.

The calcium carbonate to be employed may be any type of calcium carbonate, including precipitated calcium carbonate, and the wollastonite to be employed may be any type of wollastonite. Suitable, commercially available grades are Nyglos8 (wollastonite) and Omya EXH 1 SP (chalk) and Socal U1S2 (precipitated calcium carbonate, pcc).

Additional components

- Polymeric components

In addition, the composition in accordance with the present invention, further comprising a ethylene polymer. which is selected among LDPE, LLDPE and HDPE, more preferably HDPE. Such polymeric components may be present in an amount of up to 15-wt%, based on the total weight of the composition in accordance with the present invention, more preferably in amounts of from 5 to 15-wt%, more preferably even 8 to 12-wt%.

Preferably the ethylene polymer to be employed in the composition in accordance with the present invention is a linear polyethylene having a density of above 940 kg/m$^3$, more preferably 950 kg/m$^3$ or more, still more preferably 960 kg/m$^3$ or more, such as from 955 to 975 kg/m$^3$.

Suitable ranges for MFR$_2$ values for ethylene polymers to be employed in accordance with the present invention are from 5 to 20 g/10 min, such as from 7.5 to 10 g/10 min.

- Other additives

In addition, the composition in accordance with the present invention furthermore may comprise conventional additives, including antioxidants, stabilizers, acid scavengers, clarifying agents, coloring agents (pigments as well as dyes), anti-UV agents, anti-static agents, mold-release agents, slip agents as well as $\alpha$-nucleating agents. Typically these additives may be present in an amount of less than 2-wt% each, such as from 0.005 to 1-wt% each, more preferably from 0.005 to 0.05-wt%, based on the total weight of the composition.

Preferably the composition in accordance with the present invention does not comprise any fatty acid amides nor oxidized olefin polymers or maleated olefin polymers such as maleated polypropylene. Preferably the composition in accordance with the present invention also does not comprise a β-nucleating agent for polypropylene.

Manufacture of the composition of the present invention

The composition in accordance with the present invention may be prepared using conventional polymer processing techniques, such as mixing the components in an extruder or kneader, either by premixing in the solid state or by providing a molten polymer component into which the other components are then introduced by suitable means, such as side feeders of an extruder. Appropriate devices and process conditions are available to the skilled person.

Effects of the present invention

By employing the unique combination of a wollastonite component and a calcium carbonate component as filler, the present invention provides propylene polymer compositions showing the desired balance of properties. In particular, the compositions in accordance with the present invention display highly satisfactory mechanical properties, as shown for example by values for tensile modulus of above 1400 MPa and values for flexural modulus of above 1300 MPa. At the same time, values for charpy impact strength at 23°C as well as at -20°C are highly satisfactory, such as illustrated in the examples. The dimensional stability of the composition in accordance with the present invention is improved, compared with prior art composition, as typically expressed by a reduction of the anisotropy in shrinkage, expressed in the examples as SH difference.

Furthermore, the surface properties such as scratch resistance, exemplified by DELTA L values, are also highly satisfactory, illustrated by low DELTA L values. In embodiments, DELTA L values of compositions in accordance with the present invention are lower than DELTA L values obtained with compounds only comprising wollastonite as filler material. In addition, the problem of high anisotropy as encountered with compounds comprising only wollastonite, can also be overcome by the compositions in accordance with the present invention, as illustrated by values for SH difference being typically lower than values obtained with the use of wollastonite as only filler component.

Overall, the present invention accordingly provides a propylene polymer composition with a superior balance of properties, without requiring cost intensive or laborious components, such as functionalized polymers, surface treated fillers, nor requiring high loadings of filler components.

These and other advantages of compositions in accordance with the present invention are further illustrated below by the given examples and reference examples, illustrating the advantageous properties of compositions in accordance with the present invention.

**Definitions and determination methods used in the claims, above description and below examples**

**The xylene soluble fraction (XS)** as defined and described in the present invention is determined as follows: 2.0 g of polymer are dissolved in 250 ml p-xylene at 135°C under agitation. After 30 minutes, the solution was allowed to cool for 15 minutes at ambient temperature and then allowed to settle for 30 minutes at $25 \pm 0.5$°C. The solution was filtered with filter paper into two 100 ml flask. The solution from the first 100 ml vessel was evaporated in nitrogen flow and the residue dried under vacuum at 90°C until constant weight is reached. Xylene soluble fraction (percent) can then be determined as follows:

$$XS\% = (100 \times m_1 \times v_0)/(m_0 \times v_1),$$

wherein $m_0$ designates the initial polymer amount (grams), $m_1$ defines the weight of residue (grams), $v_0$ defines the initial volume (milliliter) and $v_1$ defines the volume of analyzed sample (milliliter).

**The intrinsic viscosity (IV)** value is increasing with the molecular weight of a polymer. IV of XS is measured according to ISO 1628 in tetrahydronaphthalin at 135°C.

**$MFR_2$:** unless otherwise specified is measured $MFR_2$ in accordance with ISO 1133 at a load of 2.16 kg, using a temperature of 230°C for propylene polymers and 190°C for polyethylene, respectively.

**Comonomer content** (weight percent) is determined in a known manner based on FTIR, calibrated with C13NMR.

The ethylene content is determined using fourier transformed infrared spectroscopy (FTIR) using the peak height at 733 cm$^{-1}$ or the ethylene peak area (760 to 700 cm$^{-1}$) as a measure of ethylene content. The measurement is carried out on compressed molded films having a thickness of 50 $\mu$m, using a calibration curve established based on 13C-NMR measurements in line with EN17025.

Multimodality including bimodality with respect to the comonomer distribution can be demonstrated using the results of the analysis with respect to the comonomer content. The multimodality, in particular is evaluated by temperature rising elution fractionation (TREF) as explained in Aust et al., Polymer Testing, 25, 2006, 896-903. Modality with respect to the molecular weight distribution can be determined in a usual manner employing size exclusion chromatography (SEC).

**Melting temperature, crystallization temperature and degree of crystallinity** are measured with a Mettler TA820 differential scanning colorimetry device (DSC) on $3 \pm 0.5$ mg samples according to ISO 3146. Crystallization and melting temperatures are obtained during 10°C/min cooling and heating scans between 30°C and 225°C. Melting and crystallization temperatures were taken as the peaks of endotherms and exotherms. The degree of crystallinity is calculated by comparison with the heat or fusion of a perfectly crystalline polypropylene, i.e. 209 J/g (according to Brandrup, J., Immergut, E.H. Eds., Polymer Handbook, 3rd Examining Division., Wiley; NY, 1989).

**Instrumental falling weight impact (IFWI)** is measured according to ISO 6603-2 using 2 mm injection moulded plaques with a diameter of 60 mm. Puncture energy reported results from an integral of the failure energy curve.

**Charpy notched impact** is measured according to ISO 179 1eA (room temperature, if not otherwise mentioned) and at -20°C using injection molded test specimen as described in EN ISO 1873-2 (80 x 10 x 4 mm).

**Tensile strength, including tensile stress at yield and strain at yield,** is measured according to ISO 572-2 (cross head speed 50 mm/min). Tensile modulus is measured according to ISO 572-2 (cross head speed 1 mm/min).

**Shrinkage** (SH) is measured on an injection molded (melt temperature of 240°C, mold temperature 40°C, injection time 2 sec) circular plate with a diameter of 180 mm and a thickness of 2 mm filled by a centrally located point gate and having a sector cutout of 7,8 mm opening (see figure below). Radial shrinkage (SH radial) is measured as relative difference between mold radius and part radius, tangential shrinkage (SH tangential) is measured as the relative difference between the cutout opening in mold and plate, and the shrinkage difference (SH difference) is calculated as

$$\text{SH difference} = \text{SH radial} - \text{SH tangential}$$

### Scratch resistance

A plate of 3 mm thickness with a fine-grained surface (type N111) is produced by injection moulding. With an Erichsen Cross Hatch Cutter model 420p, a cross hatch grid of 40 x 40 mm$^2$ (line distance 2 mm in both directions) is cut on the grained surface using the standardised Erichsen steel ball tip tool (1 mm diameter) with a force of 10 N and a cutting speed of 1000 mm/min. The difference in light reflection - delta (L) - is then measured with a spectral photometer. Better scratch resistance is expressed by lower scratch visibility and correspondingly a smaller delta(L) value

### Examples

Propylene polymer compositions as identified in the following Table 1 (all amounts wt%) were prepared using standard compounding procedures on a 24 mm twin screw extruder with an intensive mixing screw configuration in a temperature range between 200 and 220°C. All compositions contained an additive package (producers in brackets) consisting of 4-wt% carbon black masterbatch Lifocolor black 93395 (Lifocolor; with a carbon black content of 20-wt%), 0.3-wt% Crodamide ER beads (Croda), 0.15-wt% Irganox 3114 (CIBA), 0.1-wt% Tinuvin 770DF (CIBA), 0.08-wt% Chimassorb 944FD (CIBA), 0.08-wt% Chimassorb 119FL (CIBA) and 0.07-wt% Irgafos 168 (CIBA), with the balance to 100-wt% being a minor amount of additional EE014AI. The obtained formulations were evaluated with respect to mechanical properties as well as thermal and surface properties as summarized in Table 2. The results provided clearly demonstrate the superiority of the compositions in accordance with the present invention, compared with compositions comprising either calcium carbonate or wollastonite as single filler components.

**Components**

**Socal U1S1** (PCC) is a precipitated calcium carbonate with a median average particle size of 0.1 $\mu$m coated with 1-wt% stearic acid; commercially available from Solvay SA, France

**Omya EXH 1SP** (chalk) is a ground calcium carbonate with a median average particle size of 2 $\mu$m; commercially available from Omya GmbH, Switzerland

**Nyglos 8** is a fine-milled wollastonite with a bulk density of 220 kg/m$^3$, a D50 diameter of 8 $\mu$m (as determined from electron microscopy) and an aspect ratio of 19:1 which is surface coated for use in polymers; commercially available from NYCO Minerals Inc., NY, USA

**EE014AI** is a very high impact propylene-ethylene copolymer (RTPO) with an MFR (230°C/2,16kg) of 15 g/10min, an XS content of 26-wt% and an iV(XS) of 2 dl/g; commercially available from Borealis GmbH, Austria. This material is a RTPO with a bimodal rubber component.

**BE677AI** is a nucleated (nucleated with sodium 2,2'-methylene-bis-(4,6-di-tert.butylphenyl) phosphate) high impact propylene-ethylene copolymer with an MFR (230°C/2,16kg) of 12 g/10min, an XS content of 12-wt% and an iV (XS) of 2,5 dl/g; commercially available from Borealis GmbH, Austria

**MG9641** is a high density polyethylene with an MFR (190°C/2,16kg) of 8 g/10min and a density of 964 kg/m$^3$; commercially available from Borealis GmbH, Austria

Table 1

| component | | CEX1 | EX1 | EX2 | EX3* | EX4* | EX5 | CEX2 |
|---|---|---|---|---|---|---|---|---|
| EE014AI | | 68 | 63 | 63 | 63 | 63 | 68 | 69 |
| BE677AI | | 5 | 5 | 5 | 5 | 5 | 5 | 5 |
| MG9641 (HDPE) | | 11 | 11 | 11 | 11 | 11 | 11 | 11 |
| NYGLOS8 | | 11 | 11 | 11 | 6 | 6 | 6 | 0 |
| OMYA EXH1SP | | 0 | 5 | 0 | 10 | 0 | 5 | 10 |
| SOCAL U1S2 | | 0 | 0 | 5 | 0 | 10 | 0 | 0 |
| * Not according to the invention | | | | | | | | |

Table 2

| | | CEX1 | EX1 | EX2 | EX3* | EX4* | EX5 | CEX2 |
|---|---|---|---|---|---|---|---|---|
| MFR2 | g/10min | 11.5 | 11.1 | 11.1 | 11 | 11 | 11.7 | 11.3 |
| TENSILE MODULUS | MPa | 1734.7 | 1860.9 | 1892.9 | 1601.2 | 1615.5 | 1412 | 1179.4 |
| TENSILE STRESS AT YIELD | MPa | 21.9 | 21.6 | 22 | 20.7 | 21.3 | 21 | 20.6 |
| TENSILE STRAIN AT YIELD | % | 6.9 | 6.1 | 5.3 | 6.4 | 5 | 7.6 | 7.4 |
| FLEXURAL MODULUS | MPa | 1618.6 | 1749.8 | 1790.4 | 1512.7 | 1536.9 | 1330 | 1103.1 |
| CHARPY IS +23°C | kJ/m2 | 17.3 | 18.9 | 18.7 | 25.5 | 25.4 | 24.4 | 29.5 |
| CHARPY IS -20°C | kJ/m2 | 3.6 | 3.1 | 3.3 | 3.7 | 3.4 | 3.9 | 5.1 |
| PUNCTURE ENERGY | J | 37.7 | 37.2 | 37.1 | 36.5 | 36.6 | 37.6 | 36.9 |
| HDT, B | °C | 87.1 | 89.4 | 91.2 | 83.1 | 85.6 | | 72.7 |

(continued)

| | | CEX1 | EX1 | EX2 | EX3* | EX4* | EX5 | CEX2 |
|---|---|---|---|---|---|---|---|---|
| SH RADIAL | % | 1.24 | 1.16 | 1.11 | 1.21 | 1.23 | 1.19 | 1.33 |
| SH TANGENTIAL | % | 0.86 | 0.81 | 0.8 | 0.97 | 0.96 | 0.94 | 1.23 |
| SH DIFERENCE | % | 0.38 | 0.35 | 0.31 | 0.24 | 0.28 | 0.25 | 0.1 |
| DELTA L | | 0.51 | 0.54 | 0.25 | 0.21 | 0.19 | 0.04 | 0.19 |
| * Not according to the invention | | | | | | | | |

**Claims**

1. Propylene polymer composition, comprising:

   - a heterophasic propylene copolymer with ethylene and/or an $\alpha$-olefin with 4 to 12 carbon atoms, and
   - a filler, consisting of a mixture of wollastonite and calcium carbonate,

   wherein the filler is present in the propylene polymer composition in an amount of from 2 to 25-wt%, based on the total weight of the propylene polymer composition,
   wherein the content of wollastonite is higher than the content of calcium carbonate, and
   wherein the propylene polymer composition further comprises an ethylene polymer, which is selected among LDPE, LLDPE and HDPE.

2. Propylene polymer composition according to claim 1, wherein the heterophasic propylene copolymer is the product of a sequential polymerization process.

3. Propylene polymer composition according to any of the preceding claims, wherein the meltflow rate (MFR$_2$) of the heterophasic propylene copolymer is of from 0.5 to 50 g/10 min. wherein the meltflow rate is measured in accordance with ISO 1133 at 230°C, 2.16 kg load.

4. Propylene polymer composition according to any of the preceding claims, wherein wollastonite is present in an amount of from 10 to 15-wt% and calcium carbonate is present in an amount of from 5 to 10-wt%, based on the total weight of the propylene polymer composition.

5. Propylene polymer composition according to any of preceding claims, wherein the heterophasic propylene copolymer is a heterophasic propylene copolymer comprising a bimodal rubber phase, preferably a bimodal rubber phase comprising two different elastomeric ethylene propylene copolymers.

6. Molded article comprising the propylene polymer composition according to any one of claims 1 to 5.

7. Use of a polypropylene polymer composition in accordance with claims 1 to 6 within a molded article having a good balance of mechanical properties, dimensional stability and surface properties.

**Patentansprüche**

1. Propylenpolymerzusammensetzung, umfassend:

   - ein heterophasisches Propylencopolymer mit Ethylen und/oder einem $\alpha$-Olefin mit 4 bis 12 Kohlenstoffatomen, und
   - einen Füllstoff, bestehend aus einer Mischung aus Wollastonit und Kalziumcarbonat,

   wobei der Füllstoff in der Propylenpolymerzusammensetzung in einer Menge von 2 bis 25 Gew.-%, basierend auf dem Gesamtgewicht der Propylenpolymerzusammensetzung, vorhanden ist,
   wobei der Gehalt an Wollastonit höher als der Gehalt an Kalziumcarbonat ist, und wobei die Propylenpolymerzusammensetzung zusätzlich ein Ethylenpolymer umfasst, das aus LDPE, LLDPE und HDPE ausgewählt ist.

**2.** Propylenpolymerzusammensetzung gemäß Anspruch 1, wobei das heterophasische Propylencopolymer das Produkt eines sequenziellen Polymerisationsverfahrens ist.

**3.** Propylenpolymerzusammensetzung gemäß einem der vorhergehenden Ansprüche, wobei die Schmelzflussrate (MFR$_2$) des heterophasischen Propylencopolymers von 0,5 bis 50 g/10min beträgt, wobei die Schmelzflussrate in Übereinstimmung mit ISO 1133 bei 230°C, 2,16 kg Gewicht, gemessen wird.

**4.** Propylenpolymerzusammensetzung gemäß einem der vorhergehenden Ansprüche, wobei Wollastonit in einer Menge von 10 bis 15 Gew.-% vorhanden ist und Kalziumcarbonat in einer Menge von 5 bis 10 Gew.-%, basierend auf dem Gesamtgewicht der Propylenpolymerzusammensetzung, vorhanden ist.

**5.** Propylenpolymerzusammensetzung gemäß einem der vorhergehenden Ansprüche, wobei das heterophasische Propylencopolymer ein heterophasisches Propylencopolymer ist, das eine bimodale Gummiphase, bevorzugt eine bimodale Gummiphase, umfassend zwei verschiedene elastomere Ethylenpropylencopolymere, umfasst.

**6.** Geformtes Produkt, umfassend die Propylenpolymerzusammensetzung gemäß einem der Ansprüche 1 bis 5.

**7.** Verwendung einer Polypropylen Polymerzusammensetzung in Übereinstimmung mit den Ansprüchen 1 bis 6 innerhalb eines geformten Produkts, das eine gute Ausgeglichenheit an mechanischen Eigenschaften, Dimensionsstabilität und Oberflächeneigenschaften besitzt.

**Revendications**

**1.** Composition de polymère de propylène comprenant :

- un copolymère de propylène hétérophasique avec de l'éthylène et/ou une $\alpha$-oléfine ayant de 4 à 12 atomes de carbone, et
- une charge constituée d'un mélange de wollastonite et de carbonate de calcium,

la charge étant présente dans la composition de polymère de propylène en une quantité de 2 à 25 % en poids par rapport au poids total de la composition de polymère de propylène,
la teneur en wollastonite étant supérieure à la teneur en carbonate de calcium, et
la composition de polymère de propylène comprenant en outre un polymère d'éthylène, qui est choisi parmi le LDPE, le LLDPE et le HDPE.

**2.** Composition de polymère de propylène selon la revendication 1, dans laquelle le copolymère de propylène hétérophasique est le produit d'un procédé de polymérisation séquentielle.

**3.** Composition de polymère de propylène selon l'une quelconque des revendications précédentes, dans laquelle l'indice de fluidité (MFR$_2$) du copolymère de propylène hétérophasique est de 0,5 à 50 g/10 min, l'indice de fluidité étant mesuré conformément à la norme ISO 1133 à 230°C sous une charge de 2,16 kg.

**4.** Composition de polymère de propylène selon l'une quelconque des revendications précédentes, dans laquelle la wollastonite est présente en une quantité de 10 à 15 % en poids et le carbonate de calcium est présent en une quantité de 5 à 10 % en poids, par rapport au poids total de la composition de polymère de propylène.

**5.** Composition de polymère de propylène selon l'une quelconque des revendications précédentes, dans laquelle le copolymère de propylène hétérophasique est un copolymère de propylène hétérophasique comprenant une phase de caoutchouc bimodale, de préférence une phase de caoutchouc bimodale comprenant deux copolymères d'éthylène-propylène élastomères différents.

**6.** Objet moulé comprenant la composition de polymère de propylène selon l'une quelconque des revendications 1 à 5.

**7.** Utilisation d'une composition de polymère de polypropylène selon les revendications 1 à 6 au sein d'un objet moulé ayant un bon équilibre de propriétés mécaniques, de stabilité dimensionnelle et de propriétés de surface.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004000899 A
- JP 1318051 A
- EP 0804503 A
- WO 2005066265 A
- US 20020192410 A
- EP 1746128 A1
- US 2006052541 A
- EP 1801156 A
- WO 2005118712 A
- US 5234879 A
- WO 9219653 A
- WO 9219658 A
- WO 9933843 A
- EP 0887379 A1
- WO 9212182 A

### Non-patent literature cited in the description

- **AUST et al.** *Polymer Testing,* 2006, vol. 25, 896-903
- Polymer Handbook. Wiley, 1989